# EUROPEAN PATENT SPECIFICATION

(11) **EP 2 417 011 B1**
(45) Date of publication and mention of the grant of the patent: **20.03.2013**
(21) Application number: 10719038.1
(22) Date of filing: 30.03.2010
(51) Int. Cl.: B62M 3/08, B62M 6/40, B62M 6/65, B62M 6/55

(54) **POWER ASSISTING PEDAL FOR A CYCLE AND PEDAL CHARGING MEANS**
PEDAL MIT HILFSANTRIEB FÜR EIN FAHRRAD UND PEDALAUFLADUNGSMITTEL
ENTRAÎNEMENT AUXILIAIRE POUR CYCLE

(30) Priority: 08.04.2009 GB 0906099
(43) Date of publication of application: 15.02.2012
(73) Proprietor: Britt, Stephen, Sussex BN27 4NT (GB)
(72) Inventor: Britt, Stephen, Sussex BN27 4NT (GB)
(74) Representative: Stanley, David William
(86) International application number: PCT/GB2010/050534
(87) International publication number: WO 2010/128317

(56) References cited:
- WO-A1-99/38758
- DE-C- 923 348
- US-A1- 2003 205 103

## Description

The present invention relates to cycles with auxiliary drive means.

Cycles with auxiliary drive means, such as electric bicycles or other light electric vehicles, comprise an auxiliary drive arrangement to assist a rider with pedalling. They incorporate a hybrid electric power system that allows the rider to select whether to manually pedal power the cycle, or whether to supplement the pedal power with electric power means, or even to stop pedalling completely and allow the electric power means to drive the cycle. These hybrid systems can be useful to a rider when they are tiring or when riding up an incline.

Motorised bicycles that are already on the market incorporate a power assisting module that is mounted on or within the framework of the bicycle. These power assisting modules typically comprise a rechargeable battery pack and a motor drive. The motor is coupled into the gearing system of the bicycle. This additional power source provides an additional torque to the vehicle, reducing the load on the rider when required.

Bicycles and other pedal-powered vehicles are being increasingly used as a mode of transport for both business and leisure purposes. Many commuters are opting for a bicycle as an environmentally friendly alternative to a petrol driven vehicle, whilst also recognising the health benefits of cycling as a form of exercise. The cost of owning and running a car is greatly increasing with the cost of fuel, vehicle maintenance charges and additional expenses such as congestion charge and toll payments, along with the difficulties and costs of parking the vehicle once you have reached your destination. In cities, parking is a problem that most drivers have encountered at some stage. Opting to ride a bicycle within cities and other congested areas is a far more cost-effective alternative. It is also far easier to park once the rider has reached their destination. However a bicycle does require considerable effort by a rider, being physically demanding, and is therefore unsuitable for a number of journeys. A journey might encounter a number of hills or other inclines, and a rider may find the physical demands difficult.

Typical electric powered cycles that exist on the market comprise a number of modifications to the cycle itself to accommodate the additional power drive means. The cycles are often purchased with the electric drive already integrated, and are a great deal more expensive than buying a normal bicycle. Some riders have their existing cycle adapted to incorporate an auxiliary drive means, but again this process is very expensive in relation to the cost of the bicycle itself. The bicycle frame must be modified to house or support the auxiliary drive means, without affecting the balance or aerodynamics of the bicycle. The motor drive means must be coupled into the existing drive gears of the bicycle, and some form of control means must also be incorporated. A typical rider could not therefore convert their bicycle to include this auxiliary drive means without expert assistance.

Electric bicycles typically incorporate rechargeable batteries that require charging. A power pack must either be disconnected from the bicycle to take to a handy electric power outlet, or where not designed to be detachable from the bicycle, the entire unit, or at least the battery which in itself can be very large, must be taken to the power outlet. In a domestic environment, the bicycle is likely to cause an obstruction.

There is also the issue of bicycle security. Expensive hybrid bicycles are an attractive proposition to a thief when chained to a bicycle rack, railing or otherwise. Bicycle theft has always been a problem, and even more so for these expensive bicycles at the top end of the market. Existing electric bicycles do not provide means to easily detach the power module, and transport with the rider for their onward journey. Therefore they must be left on the bicycle. If however they can be disconnected, this requires a difficult procedure, and a bulky pack must be carried by the rider until they return to their bicycle.

The styling of such existing hybrid bicycles is also a problem. The power packs are cumbersome and somewhat unsightly, affecting the overall sleek design of the bicycle. When selecting a bicycle, a rider is driven by performance characteristics as well as the appearance. Typical electric bicycles, with the need to accommodate a bulky power pack, fall short in the appearance stakes.

Bicycles with removable power assisting modules have been known for some time - e.g. GB 2,336,575 (Lai), which shows an auxiliary electrical drive for a bicycle. A sun gear and bevel gear are rotatably mounted on a bottom bracket axle to supply a suitable torque to the vehicle in accordance with the driving speed of the pedals, thus reducing the load on the rider. The sun gear is drivable by an electric motor through bevel gears and a one-way clutch. However such an arrangement does not provide a retrofit system that can be adapted for a number of bicycles, but requires expert assistance to integrate within the drive system.

US 7,370,720 (Kyosuke) shows an electromotive power assisted bicycle comprising a secondary sprocket fixed to the drive shaft that is coupled to a rotating output shaft of an electromotive power output unit. This unit has been designed to retrofit to existing bicycle systems. However although the unit has been designed to incorporate fewer components, and to be a lighter and more compact alternative to other systems, mounting is still required within the bicycle framework. This affects the aerodynamics, steering, stability and appearance of the bicycle.

US 2007, 222,170 (Sasnowski) shows a similar bicycle with power assisting module, whereby the module has been designed to be conveniently removable from the bicycle., without the need for tools. The additional weight of the power assist module therefore need not be carried on journeys where pedal power alone is all that is required. Whilst attempting to solve the issues with bicycle stability, the pack must again be mounted within the frame when in use, and coupling the electric motor to the drive gear of the bicycle is a difficult and somewhat messy procedure.

WO 99/38758 discloses a pedal according to the preamble of claim 1.

Preferred embodiments of the present invention aim to provide a generally improved auxiliary drive means for a cycle. In contrast to known electric bicycles, they recognise the fact that there are a number of drawbacks to the market available systems, and aim to overcome these drawbacks. Therefore, they set out to provide an auxiliary drive means for a cycle whereby the auxiliary drive means is housed wholly within the pedals. These pedals can be retrofitted to any cycle, easily attached and reattached, conveniently removable for charging, and do not affect the appearance, stability and aerodynamics of the bicycle By housing the auxiliary drive means within the pedals, the rider has access to power assistance as and when required, whilst having the option to solely pedal power the cycle when desired. They also provide a theft prevention means, by detaching the pedals when parked, making the cycle difficult to ride away, whilst also allowing the auxiliary power pedals to be conveniently carried by the rider.

According to one aspect of the present invention, there is provided a power assisting pedal comprising:
attachment means for attaching the pedal to a crank arm of the cycle;
drive means arranged to apply a torque through a drive shaft to the crank arm; and
an electrical energy store arranged to store electrical energy and power the drive means.

Preferably, the pedal incorporates a spindle arranged to engage an end of the crank arm, and the pedal includes bearing means to provide rotation of the pedal with respect to the crank arm.

Preferably, said attachment means comprises a bayonet connector having a first part arranged to be mounted on the crank arm and a second part mounted on the pedal, such that the first and second parts may be engaged to attached the pedal to the crank arm and disengaged to remove the pedal from the crank arm.

Said drive shaft may have a flat, keyed or splined portion, to transmit power from the drive shaft to the crank arm.

Preferably, said drive means is a motor.

Preferably, said drive means is coupled to a gearbox.

Said gearbox may be epicyclic.

Said gearbox may be harmonic.

Preferably, the electrical energy store is a battery.

Said battery may be rechargeable.

Said battery may be lithium ion.

Preferably, the pedal comprises control means to activate the drive means.

Said control means may comprise a sensor, which may include a switch, activated by a foot of a rider.

Said control means may comprise a microprocessor.

Preferably, the pedal comprises means to determine the rotational speed of the drive shaft.

To this end, at least one magnet may be mounted on the drive shaft, with a Hall sensor mounted on the pedal body to detect said magnet, for determining revolution speed of the drive shaft and orientation of the pedal in relation to the crank arm.

Means (e.g. a roller clutch) may be provided to disengage the drive shaft, to enable freewheeling.

The invention extends to a cycle incorporating at least one power assisting pedal according to any of the preceding aspects of the invention.

The invention extends to a pedal charging means to receive at least one power assisting pedal according to any of the preceding aspects of the invention, wherein said pedal charging means is a docking station, and the pedal incorporates charging terminals.

For a better understanding of the invention and to show how embodiments of the same may be carried into effect, reference will now be made, by way of example, to the accompanying diagrammatic drawings, in which:
Figure 1 illustrates one example of an embodiment of a power assisting pedal in front elevation;
Figure 2 shows the power assisting pedal of Figure 1 connecting to a crank arm and gear of a cycle;
Figure 3 shows the power assisting pedal of Figure 1 with pressure sensing means, means to determine rotation speed of a drive shaft, charging terminals, and drive shaft coupling arrangement; and
Figure 4 shows a charging station for the power assisting pedal of Figure 1 in isometric view.

In the figures, like references denote like or corresponding parts.

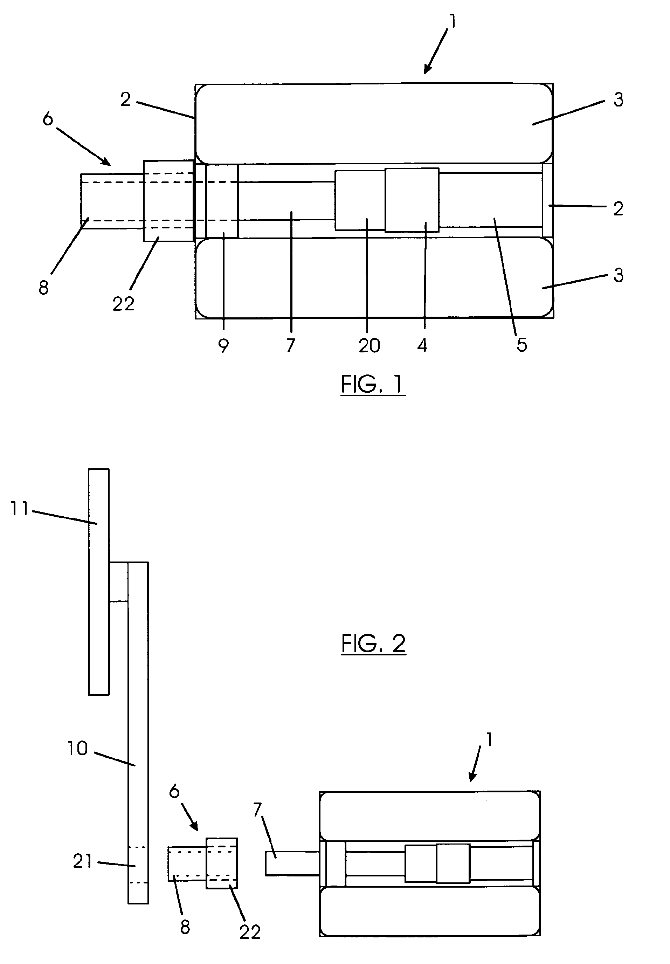

As shown in Figure 1, a pedal assembly 1 comprises a number of component parts, mounted on a body 2. The body 2 consists of a framework of metal, plastics or other material, and may include metal, plastics or other components including brackets to hold the components of the pedal together as an assembly. The pedal 1 is held together by such an arrangement to give the appearance of a typical cycle pedal, whilst providing a secure means of holding the components together, and also protecting the assembly from environmental conditions and weathering. The components could be individually housed and assembled together, or all of the components could be housed together in one housing.

The pedal 1 comprises a pair of batteries 3 that form a power source for the pedal 1. In other embodiments, there may be one or more than two batteries. The batteries 3 are rechargeable and may comprise lithium ion or other battery type. The batteries 3 are operatively connected to a motor 5 to provide power to the motor 5, which is configured to drive a drive shaft 7 via a gearbox 4 and freewheel device 20. The motor 5 may be a brushed DC, a brushless DC, three-phase or other type of motor.

The gearbox 4 is connected to the motor 5 to reduce the speed of rotation of the drive shaft 7 and provide a speed-torque conversion from the motor 5. The gearbox may be epicyclic or harmonic but is not limited to these. The pedal 1 can also operate without a gearbox 4.

The pedal 1 is provided with a bayonet connector 6, by which it is releasably attached to a crank arm 10 that is connected to a drive gear 11 of a cycle. The bayonet connector 6 has a screw-threaded spindle 8 that engages a tapped hole 21 at the end of a crank arm 10 in a conventional manner, as shown in Figure 2. Rotation of the crank arm 10 imparts a torque to the drive gear 11.

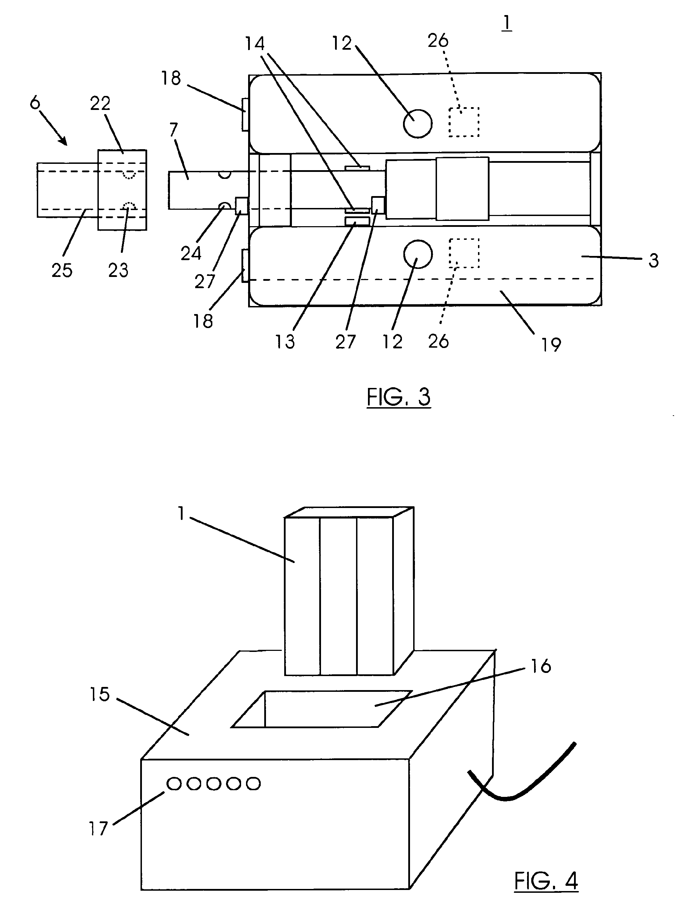

The bayonet connector 6 has an internal bore 25, which receives the drive shaft 7. As may be seen in Figure 3, the drive shaft 7 is formed with dimples 24 that engage with ball bearings 23 captive in the bayonet connector 6, such that the drive shaft 7 and bayonet connector 6 are keyed together and torque may be transmitted from the drive shaft 7 to the crank arm 10, via the bayonet connector 6. A locking ring 22 is mounted on the outside of the bayonet connector 6 and can move left and right, as seen in the drawings. When moved to the right, the locking ring 22 engages the ball bearings 23 and prevents them from moving radially outwards. When the locking ring 22 is moved to the left, the ball bearings 23 are free to move radially outwards for a sufficient distance to disengage from the dimples 24 in the drive shaft 7. The locking ring 22 may spin freely around the bayonet connector, and is preferably resiliently urged into its locking position.

This provides a quick and easy means of disengaging the pedal 1 from the crank arm 10 and subsequently re-engaging it. The locking ring or nut can be moved to release the bayonet connector 6 by hand, or by use of a tool such as a spanner. Other attachment means for attaching the pedal 1 to the crank arm 10 may be employed. The drive shaft 7 may be formed with a flat, a key or splines, to facilitate the transmission of power to the crank arm 10 via the attachment means.

The pedal 1 also comprises a bearing 9 to enable free rotation of the pedal 1 on the crank arm 10. The freewheel device 20 enables the pedal 1 to be used manually by the foot of a rider, with the power assisting means disengaged. The freewheel device 20 may comprise, for example, a ratchet type device, a Torrington (RTM) clutch (also called a roller clutch) or a sprag clutch.

In use, the cyclist keeps the pedal substantially level with his foot - as in a normal pedalling motion. This causes torque generated by the motor 5 to be transmitted via the drive shaft 7 to the crank arm 10 and thus to the drive gear 11, to give power assistance to the drive of the cycle.

As shown in Figure 3, the pedal 1 may incorporate at least one sensor 12, which may include a switch, and which detects the foot of a rider and activates the power assisting means accordingly. The rider's foot maintains the pedal 1 in a level, substantially horizontal orientation, although the pedal may not be horizontal in the case of attachment to a recumbent bicycle. The drive shaft 7, driven by the motor 5, imparts a torque to the crank arm 10 when the power assisting means has been activated. The power assisting means may only be engaged on the downward path of the pedal 1 or it may be engaged continually in the case of a clipless pedal attachment. The power assistance may also be engaged only within specific speed thresholds - e.g. above 20 revolutions per minute of the drive gear 11 up to a maximum of 70 rpm, though higher speeds are possible - e.g. 100 rpm for use in racing cyclist training.

As also shown in Figure 3, the pedal 1 may comprise means to detect the speed of rotation of the drive shaft 7 and orientation of the pedal 1. This means may comprise a Hall sensor 13, which detects the presence of one or more magnets 14 mounted to the drive shaft 7 to provide a means of counting the revolutions and the time that has elapsed therebetween. The pedal 1 may incorporate a microprocessor 19 to control the speed of the drive shaft 7.

A useful option may be means to measure cyclist input to the pedal, calculate if the cyclist wants to slow down or speed up, and control the motor accordingly. To this end, torsion sensors 27 and/or accelerometers 26 (or other sensor) may be used as means to sense cyclist input to the pedal. These control functions may be provided by the microprocessor 19.

A cycle may have one power assisting pedal 1 engaged to a crank arm 10, or may incorporate a pair of power assisting pedals 1, each mounted to a respective crank arm 10. The pedal 1 can be disconnected from the crank arm 10 to facilitate ease of charging, whilst also providing a simple means of retrofitting to any cycle, for instance, via coupling 6.

As shown in Figure 4, the pedal 1 can be charged in a docking station 15, which has a recess 16 to receive the pedal 1. Either the pedal 1, or the docking station 15, or both comprises charge status indication means, which could be in the form of a series of LEDs 17. Or each pedal may be connected to a charge wire. As shown in Figure 3, each pedal 1 preferably incorporates charging connectors 18 to engage with corresponding charging connectors mounted within the docking station 15. The pedal 1 may alternatively incorporate a charging socket.

As may be appreciated, the illustrated embodiments of the invention provide a neat and effective means to give power assistance to a pedal-powered vehicle. Performance will vary in dependence upon performance of the components such as batteries, motor, etc and also terrain. At the present time, it is envisaged that a pedal 1 may have a weight of about 1 kg or less, the motor 5 may have a power of about 100 watts, and a pair of pedals 1 may give a range of about 15 kilometres with a maximum speed of about 25 kilometres per hour.

In preferred embodiments, pedals 1 may readily be removed for recharging and for security.

The term "cycle" is used conveniently in this specification to refer to a light vehicle that is propelled by pedal power. The most common form of cycle is the two-wheeled bicycle, but the term "cycle" is to be construed to include light vehicles with any number of road wheels, which are propelled at least partly by pedal power. Embodiments of the invention may also be used in pedal powered boats, such as the pedalo.

In this specification, the verb "comprise" has its normal dictionary meaning, to denote non-exclusive inclusion. That is, use of the word "comprise" (or any of its derivatives) to include one feature or more, does not exclude the possibility of also including further features.

## Claims

1. A power assisting pedal (1) for a cycle, comprising:
- attachment means (6) for attaching the pedal (1) to a crank arm (10) of the cycle;
- an electrical energy store (3) arranged to store electrical energy;
**characterized in that** it further comprises:
- drive means (5) arranged to apply a torque through a drive shaft (7) to the crank arm (10); and
- the electrical energy store (3) is arranged to power the drive means (5).

2. A power assisting pedal according to claim 1, wherein the pedal (1) incorporates a spindle (8) arranged to engage an end of the crank arm (10), and the pedal (1) includes bearing means (9) to provide rotation of the pedal (1) with respect to the crank arm (10).

3. A power assisting pedal according to claim 1 or 2, wherein said attachment means (6) comprises a bayonet connector (6) having a first part (8, 23) arranged to be mounted on the crank arm (10) and a second part (7, 24) mounted on the pedal (1), such that the first and second parts may be engaged to attached the pedal (1) to the crank arm (10) and disengaged to remove the pedal (1) from the crank arm (10).

4. A power assisting pedal according to any of the preceding claims, wherein said drive shaft (7) has a flat, keyed or splined portion, to transmit power from the drive shaft (7) to the crank arm (10).

5. A power assisting pedal according to any of the preceding claims, wherein said drive means (5) comprises a motor (5) coupled to a gearbox (4).

6. A power assisting pedal according to claim 5, wherein said gearbox (4) is epicyclic or harmonic.

7. A power assisting pedal according to any of the preceding claims, wherein said electrical energy store (3) comprises a rechargeable battery (3).

8. A power assisting pedal according to any of the preceding claims, further comprising control means (19) arranged to control operation of the drive means (5).

9. A power assisting pedal according to claim 8, wherein said control means comprises a sensor (12) activated by a foot of a rider.

10. A power assisting pedal according to any of the preceding claims, wherein said pedal (1) incorporates charge status indication means, to indicate charge of the electrical energy store.

11. A power assisting pedal according to any of the preceding claims, further comprising means (13, 14) to determine the rotation speed of the drive shaft (7) and orientation of the pedal (1) in relation to the crank arm (10).

12. A power assisting pedal according to any of the preceding claims, wherein said pedal (1) incorporates means (20) to disengage the drive shaft (7) to enable freewheeling.

13. A power assisting pedal according to claim 12, wherein said means (20) to disengage the drive shaft (7) comprises a roller clutch.

14. A cycle incorporating at least one power assisting pedal (1) according to any of the preceding claims.

15. A power assisting pedal (1) according to any of the preceding claims and a pedal charging mean adapted to receive at least one of said power assisting pedal (1) , wherein said pedal charging means is a docking station (15), and the pedal (1) incorporates charging terminals (18).

## Patentansprüche

1. Leistungsunterstützendes Pedal (1) für ein Fahrrad, umfassend:
- Befestigungsmittel (6) zum Anbringen des Pedals (1) an einem Kurbelarm (10) des Fahrrads;
- einen Stromenergiespeicher (3), welcher angeordnet ist, um elektrischen Strom zu speichern;
**dadurch gekennzeichnet, dass** es des Weiteren umfasst:
- Antriebsmittel (5), welche angeordnet sind, um ein Drehmoment durch eine Antriebswelle (7) auf dem Kurbelarm (10) anzulegen; und
wobei der Stromspeicher (3) angeordnet ist, um die Antriebsmittel (5) mit Strom zu versorgen.

2. Leistungsunterstützendes Pedal nach Anspruch 1, wobei das Pedal (1) eine Spindel (8) umfasst, welche angeordnet ist, um in ein Ende des Kurbelarms (10) einzugreifen, und wobei das Pedal (1) Lagermittel (9) umfasst, um Drehung des Pedals (1) in Bezug auf den Kurbelarm (10) bereitzustellen.

3. Leistungsunterstützendes Pedal nach Anspruch 1 oder 2, wobei das Befestigungsmittel (6) einen Bajonettverbinder (6) umfasst, welcher einen ersten Teil (8, 23), der angeordnet ist, um am Kurbelarm (10) angebracht zu werden, und einen zweiten Teil (7, 24) aufweist, der am Pedal (1) angebracht ist, so dass der erste und der zweite Teil in Eingriff gebracht werden, um das Pedal (1) am Kurbelarm (10) anzubringen, und aus dem Eingriff gebracht zu werden, um das Pedal (1) vom Kurbelarm (10) zu entfernen.

4. Leistungsunterstützendes Pedal nach jedem beliebigen der vorangehenden Ansprüche, wobei die Antriebswelle (7) einen flachen, passfederbestückten oder verzahnten Abschnitt aufweist, um die Kraft von der Antriebswelle (7) auf den Kurbelarm (10) zu übertragen.

5. Leistungsunterstützendes Pedal nach jedem beliebigen der vorangehenden Ansprüche, wobei das Antriebsmittel (5) einen Motor (5) umfasst, welcher mit einem Getriebe (4) gekoppelt ist.

6. Leistungsunterstützendes Pedal nach Anspruch 5, wobei das Getriebe (4) epizyklisch oder harmonisch ist.

7. Leistungsunterstützendes Pedal nach jedem beliebigen der vorangehenden Ansprüche, wobei der Stromspeicher (3) eine wiederaufladbare Batterie (3) umfasst.

8. Leistungsunterstützendes Pedal nach jedem beliebigen der vorangehenden Ansprüche, des Weiteren umfassend Steuermittel (19), welche angeordnet sind, um den Betrieb der Antriebsmittel (5) zu steuern.

9. Leistungsunterstützendes Pedal nach Anspruch 8, wobei die Steuermittel einen Sensor (12) umfassen, welcher durch den Fuß eines Fahrradbenützers aktiviert wird.

10. Leistungsunterstützendes Pedal nach jedem beliebigen der vorangehenden Ansprüche, wobei das Pedal (1) Ladungsstatusanzeigemittel umfasst, um die Ladung des Stromspeichers anzuzeigen.

11. Leistungsunterstützendes Pedal nach jedem beliebigen der vorangehenden Ansprüche, des Weiteren umfassend Mittel (13, 14), um die Drehungszahl der Antriebswelle (7) und die Ausrichtung des Pedals (1) in Bezug auf den Kurbelarm (10) zu erfassen.

12. Leistungsunterstützendes Pedal nach jedem beliebigen der vorangehenden Ansprüche, wobei das Pedal (1) Mittel (20) umfasst, um die Antriebswelle (7) aus dem Eingriff zu bringen, um den Freilauf zu ermöglichen.

13. Leistungsunterstützendes Pedal nach Anspruch 12, wobei die Mittel (20), um die Antriebswelle (7) aus dem Eingriff zu bringen, eine Rollenkupplung umfassen.

14. Fahrrad, welches wenigstens ein leistungsunterstützendes Pedal (1) nach jedem beliebigen der vorangehenden Ansprüche umfasst.

15. Leistungsunterstützendes Pedal (1) nach jedem beliebigen der vorangehenden Ansprüche und ein Pedallademittel, welches ausgelegt ist, um wenigstens ein leistungsunterstützendes Pedal (1) aufzunehmen, wobei das Pedallademittel eine Andockstation (15) ist und das Pedal (1) Ladeklemmen (18) umfasst.

## Revendications

1. Pédale d'aide électrique (1) pour un cycle, comprenant :
- un moyen de fixation (6) pour fixer la pédale (1) à un bras de manivelle (10) du cycle
- un stockage d'énergie électrique (3) disposé de manière à stocker de l'énergie électrique ;
**caractérisée en ce qu'**il comprend en outre :
- un moyen de transmission (5) disposé de manière à appliquer un couple par un arbre de transmission (7) au bras de manivelle (10) ; et
- le stockage d'énergie électrique (3) est disposé de manière à alimenter le moyen de transmission (5).

2. Pédale d'aide électrique selon la revendication 1, où la pédale (1) intègre un axe (8) disposé de manière à enclencher une extrémité du bras de manivelle (10), et la pédale (1) inclut un moyen de support (9) pour assurer la rotation de la pédale (1) par rapport au bras de manivelle (10).

3. Pédale d'aide électrique selon la revendication 1 ou 2, où ledit moyen de fixation (6) comprend un connecteur à baïonnette (6) ayant une première partie (8, 23) disposée de manière, à être montée sur le bras de manivelle (10) et une deuxième partie (7, 24) montée sur la pédale (1), de sorte que les première et deuxième parties puissent être enclenchées pour fixer la pédale (1) au bras de manivelle (10) et désenclenchées pour enlever la pédale (1) du bras de manivelle (10).

4. Pédale d'aide électrique selon l'une quelconque des revendications précédentes, où ledit arbre de transmission (7) a une partie plate, clavetée ou cannelée, pour transmettre l'énergie provenant dudit arbre de transmission (7) vers le bras de manivelle (10).

5. Pédale d'aide électrique selon l'une quelconque des revendications précédentes, où ledit moyen de transmission (5) comprend un moteur (5) couplé à une boîte à engrenages (4).

6. Pédale d'aide électrique selon la revendication 5, où ladite boîte à engrenages (4) est épicyclique ou harmonique.

7. Pédale d'aide électrique selon l'une quelconque des revendications précédentes, où ledit stockage d'énergie électrique (3) comprend une batterie rechargeable (3).

8. Pédale d'aide électrique selon l'une quelconque des revendications précédentes, comprenant en outre un moyen de commande (19) disposé de manière à commander le fonctionnement du moyen de transmission (5).

9. Pédale d'aide électrique selon la revendication 8, où ledit moyen de commande comprend un capteur (12) activé par un pied d'un cycliste.

10. Pédale d'aide électrique selon l'une quelconque des revendications précédentes, où ladite pédale (1) intègre un moyen d'indication de l'état de charge, pour indiquer la charge du stockage d'énergie électrique.

11. Pédale d'aide électrique selon l'une quelconque des revendications précédentes, comprenant en outre un moyen (13, 14) de détermination de la vitesse de rotation de l'arbre de transmission (7) et de l'orientation de la pédale (1) en rapport avec le bras de manivelle (10).

12. Pédale d'aide électrique selon l'une quelconque des revendications précédentes, où ladite pédale (1) intègre un moyen (20) pour désenclencher l'arbre de transmission (7) pour permettre de rouler en roue libre.

13. Pédale d'aide électrique selon la revendication 12, où ledit moyen (20) de désenclenchement de l'arbre de transmission (7) comprend une roue libre à galets.

14. Cycle intégrant au moins une pédale d'aide électrique (1) selon l'une quelconque des revendications précédentes.

15. Pédale d'aide électrique (1) selon l'une quelconque des revendications précédentes et moyen de chargement de la pédale apte à recevoir au moins une pédale d'aide électrique (1), où ledit moyen de chargement de la pédale est une station d'accueil (15), et la pédale (1) intègre des bornes de chargement (18).
